# DEMANDE DE BREVET EUROPEEN

(11) **EP 1 306 392 A1**
(43) Date de publication de la demande: **02.05.2003**
(21) Numéro de dépôt: 02292570.5
(22) Date de dépôt: 17.10.2002
(51) Int. Cl.: C08F 8/00, C08F 255/00, H01B 3/18, H01B 3/20

(54) **Procédé de fabrication d'une gaine de cable par extrusion et réticulation d'une composition à base de polymère greffé silane, et cable comportant une gaine obtenue par ce procédé**

(30) Priorité: 23.10.2001 FR 0114193
(71) Demandeur: Nexans, 75020 Paris (FR)
(72) Inventeur: Barioz, Chantal, 69003 Lyon (FR)
(74) Mandataire: Feray, Valérie

(57) **Abrégé**

La présente invention concerne un procédé de fabrication d'une gaine de câble par extrusion et réticulation d'une composition à base d'un polymère greffé silane comprenant les étapes suivantes :
**a)** mélange des composés suivants :
   **i.** un polymère de base thermoplastique ou un mélange de polymères de base thermoplastiques
   **ii.** un premier composé à base de silane
   **iii.** un générateur de radicaux libres
**b)** extrusion dudit mélange sur un câble pour obtenir ladite gaine
**c)** réticulation de ladite gaine.

Ce procédé se caractérise par le fait que l'on incorpore au cours du mélange un composé contenant une fonction amine secondaire, et en ce que la réticulation est effectuée à l'atmosphère ambiante.

## Description

La présente invention concerne un procédé de fabrication d'une gaine de câble par extrusion et réticulation d'une composition à base d'un polymère greffé silane, ainsi qu'un câble comportant une gaine obtenue par ce procédé.

Dans tout ce qui suit, on emploiera le terme « gaine » pour désigner aussi bien l'isolation électrique que la gaine de protection extérieure d'un câble.

Les polymères greffés silane sont bien connus, et utilisés notamment pour réaliser l'isolation et le gainage des câbles d'énergie, basse, moyenne, haute et très haute tension. Ils ont l'avantage de posséder des propriétés d'isolation électrique et de tenue mécanique particulièrement intéressantes, la réticulation augmentant la tenue mécanique et thermique de la composition.

Il est connu en effet que les propriétés physiques des polymères peuvent être modifiées en réticulant les chaînes de polymère. La réticulation au moyen de silane, et plus généralement la réticulation utilisant comme agent de réticulation un ou des alkoxysilanes oléfiniques non saturés, est un procédé largement utilisé pour réticuler les polymères. Il existe un procédé connu de fabrication de gaines de câbles à partir de polymère greffés silane, dit procédé Sioplas ® décrit dans le brevet US-3 646 155.

Il consiste dans une première étape, généralement dénommée « greffage », à mélanger un polymère de base, notamment un polymère thermoplastique comme par exemple une polyoléfine, telle que le polyéthylène, avec une solution contenant l'agent de réticulation au silane et un générateur de radicaux libres tel qu'un peroxyde. On obtient ainsi un granulé de polymère greffé silane.

Dans une deuxième étape de ce procédé, généralement dénommée « compoundage », on mélange ce granulé greffé silane avec des charges minérales (notamment un additif ignifugeant), des cires (agents de mise en oeuvre) et des stabilisants (pour empêcher le vieillissement de la gaine sur câble). On obtient alors un compound.

Ce compound est ensuite, dans une troisième étape d'extrusion, mélangé avec un colorant et un catalyseur tel qu'un sel métallique (sel d'étain par exemple), dans une extrudeuse telle qu'une extrudeuse à vis, puis extrudé sur un câble.

Enfin, lors d'une quatrième étape, la réticulation est déclenchée en présence d'une grande quantité d'eau et en chauffant. On appelle communément cette étape réticulation « dans la piscine » ou « dans le sauna ».

Ce procédé est donc pénalisant sur le plan industriel car la réticulation « dans la piscine » doit être effectuée en reprise, une fois le câble terminé, et nécessite de placer les bobines de câbles dans de grands bacs remplis d'eau afin d'obtenir une réticulation complète de la gaine fabriquée. Le rendement de production des câbles ainsi fabriqués est médiocre et la fabrication requiert des installations importantes et coûteuses, industriellement très pénalisantes.

La présente invention a donc pour but de mettre au point un procédé de fabrication d'une gaine de câble par extrusion et réticulation d'une composition à base d'un polymère greffé silane qui ne nécessite pas d'étape de réticulation « dans la piscine » ou « dans le sauna ».

La présente invention propose à cet effet un procédé de fabrication d'une gaine de câble par extrusion et réticulation d'une composition à base d'un polymère greffé silane comprenant les étapes suivantes :
**a)** mélange des composés suivants :
   **i.** un polymère de base thermoplastique ou un mélange de polymères de base thermoplastiques
   **ii.** un premier composé à base de silane
   **iii.** un générateur de radicaux libres
**b)** extrusion dudit mélange sur un câble pour obtenir ladite gaine
**c)** réticulation de ladite gaine
caractérisé en ce que l'on incorpore avant ladite réticulation un composé contenant une fonction amine secondaire, et en ce que ladite opération de réticulation est effectuée à l'atmosphère ambiante.

De façon tout à fait surprenante, on a découvert, selon la présente invention, que dans le cas des procédés de type Sioplas ®, l'ajout d'un composé contenant une fonction amine secondaire avant la réticulation, c'est-à-dire soit dans le mélange, soit après l'étape de greffage, durant l'étape de « compoundage », soit enfin durant l'étape d'extrusion ultérieure sur un câble, a pour effet de provoquer l'auto-réticulation du mélange sans ajout d'humidité autre que la présence de l'humidité ambiante.

Dans le cas du procédé de type Sioplas ®, la gaine obtenue par le procédé selon l'invention peut donc ainsi être réticulée au bout de 5 jours à l'air ambiant, alors que les gaines de l'art antérieur nécessitent une réticulation durant environ deux jours dans une piscine chauffée entre 65 et 70°C. Le composé contenant une fonction amine secondaire joue ainsi un rôle de catalyseur de la réticulation.

De manière très avantageuse, le composé contenant une fonction amine secondaire est incorporé au cours de l'extrusion.

Il peut également être incorporé au cours du mélange.

Selon un mode de mise en oeuvre de l'invention, l'étape de mélange conduit à un polymère greffé silane et est suivie d'une étape de compoundage au cours de laquelle au moins un additif est ajouté au polymère greffé.

Dans ce cas, le composé contenant une fonction amine secondaire peut être incorporé au cours de l'étape de compoundage ou au cours de l'étape d'extrusion.

Le composé contenant une fonction amine secondaire peut être choisi parmi les amines secondaires, comme par exemple la diméthylamine, la diéthylentriamine, les amines secondaires hétérocycliques, ainsi que leurs sels métalliques, ou encore parmi les aminosilanes.

De manière avantageuse, le composé contenant une fonction amine secondaire peut être choisi parmi un deuxième composé silane et un additif stabilisant.

De préférence, le composé contenant une fonction amine secondaire est contenu dans la composition dans une proportion comprise entre 0,3 et 1 part pour 100 parts de polymère greffé silane.

De préférence, le composé contenant une fonction amine secondaire est le N-(n-butyl)-3-aminopropyltrimethoxysilane.

De préférence, le polymère de base thermoplastique est choisi parmi un copolymère d'éthylène et d'acétate de vinyle (EVA), un copolymère d'éthylène et d'acrylate d'éthyl (EEA), un copolymère d'éthylène et d'acrylate de butyl (EBA), un polyéthylène, un terpolymère d'éthylène et de propylène insaturé.

Selon un mode de réalisation avantageux, le premier composé silane est choisi parmi le triméthoxysilane, le vinyltriméthoxysilane, le vinyltriéthoxysilane, le vinyltrichlorosilane.

Le générateur de radicaux libres est par exemple un peroxyde.

Avantageusement, on incorpore en outre dans le mélange un catalyseur de la réticulation, de préférence un sel métallique tel qu'un sel d'étain.

On peut en outre incorporer dans le mélange au moins un additif tel qu'un stabilisant, une charge ignifugeante, un agent de mise en oeuvre, un anti-oxydant.

L'invention concerne également un câble, électrique ou optique, qui comprend au moins une gaine extrudée obtenue selon le procédé ci-dessus.

D'autres caractéristiques et avantages de la présente invention apparaîtront dans la description suivante d'un exemple de réalisation de l'invention, donné à titre illustratif et nullement limitatif.

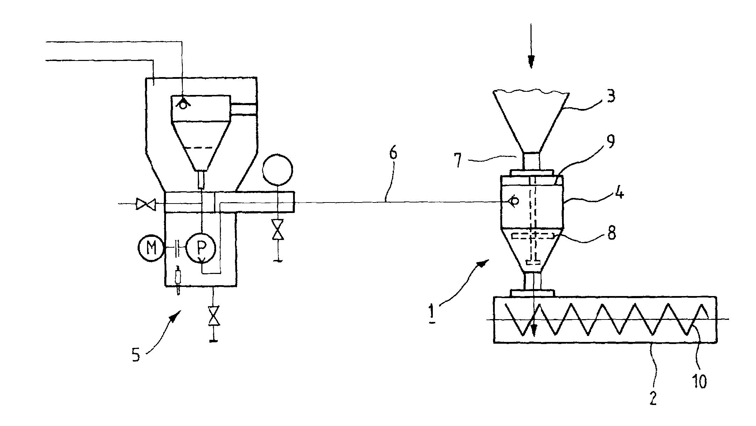

La figure unique représente schématiquement un dispositif pour la mise en oeuvre du procédé de l'invention.

On va maintenant décrire, en relation avec la figure, le procédé de l'invention dans sa mise en oeuvre pour la fabrication d'une gaine de câble électrique, et notamment de câble d'énergie. Comme on l'a déjà expliqué plus haut, on entend par gaine toute couche d'un câble obtenue à partir d'un matériau polymère, qu'elle remplisse le rôle d'isolation électrique ou de gaine de protection mécanique.

On voit sur la figure un dispositif 1 qui peut être utilisé pour la mise en oeuvre du procédé de l'invention du type Sioplas ®. Le dispositif 1 est un dispositif à mélangeur continu, c'est-à-dire que le mélange issu du compoundage est directement injecté dans l'extrudeuse. Le dispositif 1 comprend une extrudeuse 2 à vis 10 et une trémie 3 disposée au-dessus de l'extrudeuse 2 et destinée à recevoir un polymère greffé silane non réticulé, par exemple sous forme de granulat. Un mélangeur 4 est disposé entre la trémie 3 et l'extrudeuse 2.

Le polymère greffé silane a préalablement été obtenu par mélange puis chauffage d'un polymère de base, d'un composé silane et d'un générateur de radicaux libres tel qu'un péroxyde.

Dans le mélangeur 4 débouche par ailleurs une conduite d'amenée 6 qui vient d'une unité formant pompe de dosage 5 et qui est prévue notamment pour incorporer dans le polymère greffé silane un certain nombre d'additifs tels qu'une charge minérale (par exemple une charge ignifugeante), un agent de mise en oeuvre sous forme de cire, un ou plusieurs stabilisants, etc.... Ces additifs sont amenés à l'intérieur du mélangeur 4 grâce à un injecteur 7.

Selon l'invention, parmi ces additifs, on trouve le composé contenant une fonction amine secondaire. Ce composé peut être notamment un deuxième composé silane, contenant une fonction amine secondaire, ou encore un stabilisant contenant une telle fonction.

On appelle classiquement stabilisant un composé permettant d'éviter un vieillissement par dépolymérisation du polymère réticulé. Il appartient généralement à la catégorie des anti-oxydants ou à celle des anti-UV.

L'ajout du composé contenant une fonction amine secondaire permet, selon l'invention, d'accélérer la réaction de réticulation du polymère greffé silane et sert ainsi de catalyseur à cette réaction. Cette accélération permet, selon l'invention, d'éviter l'étape ultérieure de réticulation « dans la piscine » des procédés de l'art antérieur du type Sioplas ®.

A l'intérieur du mélangeur 4 est disposé un mécanisme agitateur 8 entraîné par un mécanisme d'entraînement 9.

L'extrudeuse 2 à vis est une extrudeuse connue pour l'extrusion de matière plastique, qui présente un rapport total de vis 10 longueur/diamètre d'environ 26/1.

Le compound non encore réticulé arrive dans l'extrudeuse 2 directement à partir du mélangeur 4. En sortie de l'extrudeuse 2, on obtient la gaine souhaitée déposée sur le câble à revêtir (non représenté).

En sortie de l'extrudeuse 2, le câble gainé obtenu peut être laissé à l'air ambiant, et l'on observe sa réticulation dans un délai compris entre 5 et 7 jours.

On va maintenant illustrer l'invention en donnant deux exemples de compositions destinées à être réticulées, l'une selon l'art antérieur (Exemple 1) et l'autre selon l'invention (Exemple 2).

### Exemple 1

On prépare selon le procédé décrit ci-dessus une composition A contenant :
- 100 parts d'EVA greffé à 1% d'une mixture silane (97% de vinyltriméthoxysilane et 3% de peroxyde)
- 170 parts de trihydrate d'alumine Al(OH)₃ comme charge ignifugeante
- 3 parts de cire comme agent de mise en oeuvre
- 1 part de stabilisant UV
- 2 parts d'anti-oxydant.

La réticulation de la gaine extrudée obtenue à partir de cette composition est effectuée par insertion du câble dans une piscine à 70°C durant 24 heures.

### Exemple 2

On prépare selon le procédé décrit ci-dessus une composition B contenant :
- 100 parts d'EVA greffé à 1% d'une mixture silane (97% de vinyltriméthoxysilane et 3% de peroxyde)
- 170 parts de trihydrate d'alumine Al(OH)₃ comme charge ignifugeante
- 3 parts de cire comme agent de mise en oeuvre
- 1 part de stabilisant UV
- 2 parts d'anti-oxydant
- 0,5 part de stabilisant Dynasilan 1189 commercialisé par la société DEGUSSA et formé d'un composé silane contenant une fonction amine secondaire : le N-(n-butyl)-3-aminopropyltriméthoxysilane

La réticulation de la gaine extrudée obtenue à partir de cette composition est obtenue à l'air libre après 5 jours.

On note en outre que les caractéristiques mécaniques et électriques de la gaine obtenue à partir de la composition B sont semblables à celles obtenues avec la composition A, c'est-à-dire que la composition B répond aux exigences requises pour être utilisée dans des câbles d'énergie.

Bien entendu, la présente invention n'est pas limitée au mode de réalisation qui vient d'être décrit.

En premier lieu, il est préférable d'introduire le composé contenant une fonction amine secondaire selon l'invention dans l'extrudeuse, de manière à éviter que le polymère greffé commence à réticuler avant sa mise en oeuvre par extrusion. Toutefois, le composé contenant une fonction amine secondaire peut être introduit également soit au cours du mélange du polymère avec le générateur de radicaux libres et le composé silane servant au greffage, soit lors de l'étape ultérieure de compoundage. De manière plus générale, il peut être introduit à tout moment avant la réticulation.

Par ailleurs, on a décrit la mise en oeuvre du procédé selon l'invention à l'aide d'un dispositif à mélangeur continu, mais on peut bien entendu également mettre en oeuvre le procédé selon l'invention à l'aide d'un mélangeur discontinu, c'est-à-dire que l'étape de compoundage du polymère greffé silane est effectuée dans un mélangeur non relié à l'extrudeuse à vis.

Le composé contenant une fonction amine secondaire peut être un stabilisant, comme cela a été décrit, ou un deuxième composé silane, mais également tout autre additif susceptible de comporter une fonction amine secondaire.

Selon l'invention, on peut également ajouter avec les additifs usuels une faible quantité de catalyseur de la réticulation, tel qu'un sel métallique, notamment un sel d'étain comme le dibutyl dilaurate d'étain par exemple ou encore un titanate. Cela accélère encore la réaction de réticulation.

Le procédé selon l'invention a été décrit pour une composition comportant un polymère de base unique, mais on peut également mettre en oeuvre le procédé de l'invention sur une composition comprenant un mélange de polymères de base.

Par ailleurs, on a décrit le procédé de l'invention utilisant un composé silane liquide destiné à être greffé sur le polymère de base, mais il est également possible, dans le cadre de l'invention, d'utiliser des composés silanes sous forme d'encapsulats solide comme décrit dans le document EP-0 426 073.

Enfin, on pourra remplacer tout moyen par un moyen équivalent sans sortir du cadre de l'invention.

## Revendications

1. Procédé de fabrication d'une gaine de câble par extrusion et réticulation d'une composition à base d'un polymère greffé silane comprenant les étapes suivantes :
**a)** mélange des composés suivants :
**i.** un polymère de base thermoplastique ou un mélange de polymères de base thermoplastiques
**ii.** un premier composé à base de silane
**iii.** un générateur de radicaux libres
**b)** extrusion dudit mélange sur un câble pour obtenir ladite gaine
**c)** réticulation de ladite gaine
**caractérisé en ce que** l'on incorpore avant ladite réticulation un composé contenant une fonction amine secondaire, et **en ce que** ladite réticulation est effectuée à l'atmosphère ambiante.

2. Procédé selon la revendication 1 **caractérisé en ce que** ledit composé contenant une fonction amine secondaire est incorporé au cours de ladite extrusion.

3. Procédé selon la revendication 1 **caractérisé en ce que** ledit composé contenant une fonction amine secondaire est incorporé au cours dudit mélange.

4. Procédé selon l'une des revendications 1 à 3 **caractérisé en ce que** ladite étape de mélange conduit à un polymère greffé silane et est suivie d'une étape de compoundage au cours de laquelle au moins un additif est ajouté audit polymère greffé, ladite étape de compoundage précédant ladite étape d'extrusion.

5. Procédé selon la revendication 4 **caractérisé en ce que** ledit composé contenant une fonction amine secondaire est incorporé au cours de ladite étape de compoundage ou au cours de ladite étape d'extrusion.

6. Procédé selon l'une des revendications 1 à 5 **caractérisé en ce que** ledit composé contenant une fonction amine secondaire est choisi parmi un deuxième composé silane et un additif stabilisant.

7. Procédé selon l'une des revendications 1 à 6 **caractérisé en ce que** ledit composé contenant une fonction amine secondaire est contenu dans ladite composition dans une proportion comprise entre 0,3 et 1 part pour 100 parts dudit mélange.

8. Procédé selon l'une des revendications 1 à 7 **caractérisé en ce que** ledit composé contenant une fonction amine secondaire est le N-(n-butyl)-3-aminopropyltrimethoxysilane.

9. Procédé selon l'une des revendications 1 à 8 **caractérisé en ce que** ledit polymère de base thermoplastique est choisi parmi un copolymère d'éthylène et d'acétate de vinyle (EVA), un copolymère d'éthylène et d'acrylate d'éthyl (EEA), un copolymère d'éthylène et d'acrylate de butyl (EBA), un polyéthylène, un terpolymère d'éthylène et de propylène insaturé.

10. Procédé selon l'une des revendications 1 à 9 **caractérisé en ce que** ledit premier composé silane est choisi parmi le triméthoxysilane, le vinyltriméthoxysilane, le vinyltriéthoxysilane, le vinyltrichlorosilane.

11. Procédé selon l'une des revendications 1 à 10 **caractérisé en ce que** ledit générateur de radicaux libres est un peroxyde.

12. Procédé selon l'une des revendications 1 à 11 **caractérisé en ce que** l'on incorpore en outre dans ledit mélange un catalyseur de ladite réticulation, de préférence un sel métallique tel qu'un sel d'étain.

13. Procédé selon l'une des revendications 1 à 12 **caractérisé en ce que** l'on incorpore en outre dans ledit mélange au moins un additif choisi parmi un stabilisant, une charge ignifugeante, un agent de mise en oeuvre, un anti-oxydant.

14. Câble électrique ou optique **caractérisé en ce qu'**il comprend au moins une gaine extrudée obtenue par le procédé selon l'une des revendications 1 à 13.
